# FASCICULE DE BREVET EUROPEEN

(11) **EP 3 942 194 B1**
(45) Date de publication et mention de la délivrance du brevet: **13.08.2025**
(21) Numéro de dépôt: 20725829.4
(22) Date de dépôt: 05.03.2020
(51) Int. Cl.: F16F 9/43

(54) **SUSPENSION REGLABLE POUR UN VELO**
EINSTELLBARER DÄMPFER FÜR EIN FAHRRAD
ADJUSTABLE SUSPENSION FOR A BICYCLE

(30) Priorité: 22.03.2019 FR 1903006
(43) Date de publication de la demande: 26.01.2022
(73) Titulaire: Decathlon, 59650 Villeneuve d'Ascq (FR)
(72) Inventeur: ORTUNO AYUSO, Pablo, 59650 Villeneuve D'Ascq (FR); GARATE, Zigor, 59650 Villeneuve D'Ascq (FR)
(74) Mandataire: Cabinet Beau de Loménie
(86) Numéro de dépôt international: PCT/FR2020/050443
(87) Numéro de publication internationale: WO 2020/193897

(56) Documents cités:
- EP-A1- 2 404 818
- EP-A2- 2 450 591
- DE-A1- 102007 056 313

## Description

### Domaine Technique

La présente invention concerne le domaine des suspensions réglables pour vélo et notamment des suspensions dont la précontrainte peut être réglée. De telles suspensions peuvent équiper une fourche ou un amortisseur de vélo.

La précontrainte d'une suspension est également appelée SAG, et correspond à l'affaissement de la suspension en fonction du poids de l'utilisateur. La précontrainte est généralement associée à un pourcentage de la course totale de la suspension entre une position comprimée et une position non comprimée. La précontrainte adaptée est différente pour chaque utilisateur et doit donc être réglée avant l'utilisation du vélo.

### Technique antérieure

On connait des suspensions de vélo à ressort mécanique dans lesquelles la précontrainte est réglée en ajustant la contrainte exercée sur le ressort au repos. Un inconvénient de ces suspensions est que le ressort mécanique est généralement très lourd et qu'il n'offre pas une plage de réglage de précontrainte suffisamment grande. Aussi, il est parfois nécessaire de changer le ressort mécanique en fonction du poids de l'utilisateur.

On connait également des suspensions à air dans lesquelles la précontrainte est réglée en ajustant la pression de l'air dans la suspension.

La pression est généralement ajustée manuellement à l'aide d'une pompe à air manuelle. On réalise alors une procédure d'ajustement de la pression par tâtonnement, dans laquelle il est généralement nécessaire d'injecter de l'air dans la suspension puis d'éjecter de l'air hors de la suspension à plusieurs reprises.

La procédure de réglage de la précontrainte implique alors une répétition importante et fastidieuse d'étapes afin d'obtenir la précontrainte souhaitée.

Il est par ailleurs connu du document EP2573420 une suspension comprenant une première chambre, une chambre secondaire et un élément de contrôle mobile permettant de mettre en communication alternativement la première chambre avec la chambre secondaire et la chambre secondaire avec l'extérieur de la suspension, afin de réduire progressivement la pression de la première chambre.

La pression dans la première chambre est donc initialement portée à une valeur excessive puis est réduite manuellement et par tâtonnement par l'utilisateur, jusqu'à atteindre une précontrainte qui lui parait convenable.

Un inconvénient de cette suspension est que l'utilisateur doit estimer lui-même lorsque la précontrainte lui semble satisfaisante et qu'il n'est pas guidé dans ce réglage. Il ne peut donc pas régler la précontrainte à une valeur adaptée à son propre poids. Le réglage de la précontrainte est particulièrement long, difficile et imprécis.

En outre, si la pression dans la première chambre devient insuffisante, l'utilisateur doit de nouveau injecter de l'air dans la suspension et répéter les actions de réglage manuel de la précontrainte, ce qui est très contraignant.

Les documents EP 2 450 591 A2 et EP 2 404 818 A1 divulguent chacun une suspension réglable pour vélo.

### Exposé de l'invention

Un but de la présente invention est de proposer une suspension réglable pour vélo remédiant aux problèmes précités.

Pour ce faire, l'invention porte sur une suspension réglable pour un vélo, comprenant :
- un corps de suspension muni d'une entrée principale de fluide configurée pour injecter un fluide dans le corps de suspension, et d'une sortie de fluide ;
- un piston disposé dans le corps de suspension et comprenant une tête de piston délimitant une première chambre et une deuxième chambre à l'intérieur dudit corps de suspension, la première chambre étant en communication fluidique avec l'entrée principale de fluide, le piston étant mobile en translation dans le corps de suspension entre :
   au moins une première position dans laquelle la sortie de fluide communique fluidiquement avec la deuxième chambre mais pas avec la première chambre, de manière à déployer le piston, et
   au moins une deuxième position dans laquelle la sortie de fluide est en communication fluidique avec la première chambre de sorte que le fluide injecté par l'entrée principale de fluide est guidé vers la sortie de fluide, afin d'évacuer le fluide injecté hors de la suspension, le piston étant configuré pour passer de la première position à la deuxième position lorsque du fluide est injecté par l'entrée principale de fluide; et un dispositif de valve pouvant prendre un premier état dans lequel il empêche le fluide de s'échapper de la suspension, et un second état dans lequel il autorise l'extraction du fluide hors de la suspension, le dispositif de valve étant conformé pour être amené dans le second état lorsqu'un fluide est injecté par l'entrée principale de fluide et pour être amené dans le premier état lorsque l'injection de fluide est interrompue.

Sans sortir du cadre de l'invention, la suspension peut être une suspension avant ou une suspension arrière de vélo. De manière non limitative, il peut s'agir d'une suspension pneumatique et/ou hydraulique.

L'entrée principale de fluide peut être connectée à une pompe ou à une cartouche de fluide, afin d'injecter le fluide dans la suspension. La sortie de fluide débouche hors de la suspension réglable. L'entrée principale de fluide communique avec la première chambre lorsque le piston est dans la première position et lorsqu'il est dans la deuxième position.

Le corps de suspension comprend avantageusement un premier fond définissant avec la tête de piston ladite deuxième chambre. Le corps de suspension comprend avantageusement un second fond définissant avec la tête de piston ladite première chambre. En variante et de manière non limitative, le second fond peut être formé par un élément séparé connecté au corps de suspension.

Le déplacement en translation du piston dans le corps de suspension a pour conséquence de modifier le volume de la première chambre et de la deuxième chambre.

Pour régler la précontrainte de la suspension, l'utilisateur monte sur le vélo, de manière à exercer son poids sur la suspension afin de la comprimer et d'en extraire au moins en partie le fluide. Le piston est déplacé vers le second fond et est placé dans la première position.

De manière non limitative, dans la première position, la première chambre peut être entièrement vidée de fluide ou contenir encore une faible quantité de fluide.

L'utilisateur injecte alors du fluide, par exemple de l'air, un gaz ou un liquide, via l'entrée principale de fluide. La suspension est configurée de sorte que le fluide injecté par l'entrée principale de fluide est amené dans la première chambre.

Dans cette première position, le piston empêche la communication fluidique entre l'entrée principale de fluide et la sortie de fluide. En d'autres mots, le piston s'oppose au passage du fluide injecté par l'entrée principale de fluide jusqu'à la sortie de fluide. En outre, le piston, l'entrée principale de fluide et le corps de suspension sont de préférence configurés pour que le fluide reste dans la première chambre tant que le piston est dans la première position.

Dans cette première position, la première chambre et la deuxième chambre ne sont pas non plus en communication fluidique.

La première chambre ne se vide pas lors de l'injection de fluide par l'entrée principale de fluide. Un intérêt est de permettre le réglage de la précontrainte uniquement par injection du fluide.

Cette injection de fluide a pour conséquence d'augmenter peu à peu la pression dans la première chambre et donc la précontrainte (ou SAG) de la suspension. Le fluide injecté exerce en outre un effort sur le piston de sorte que ce dernier est déployé et s'éloigne du second fond du corps de suspension. Le fluide injecté par l'entrée principale de fluide est de préférence maintenu dans la première chambre.

Le piston est déplacé en translation dans le corps de suspension jusqu'à une deuxième position. Le piston est alors positionné de sorte que la sortie de fluide communique fluidiquement avec la première chambre et donc de sorte que l'entrée principale de fluide et la sortie de fluide sont en communication fluidique. Le fluide injecté par l'entrée principale de fluide est donc guidé vers la sortie de fluide et est évacué hors de la suspension réglable.

Dans la deuxième position, si l'injection de fluide est poursuivie, le fluide injecté n'est pas maintenu dans la première chambre. Le fluide injecté par l'entrée principale de fluide alors que le piston est dans la deuxième position est guidé directement vers la sortie de fluide.

De préférence, le fluide injecté traverse la première chambre avant d'être guidé vers la sortie de fluide, de sorte qu'il ne reste pas dans la première chambre.

Dans cette deuxième position du piston, la pression dans la première chambre n'augmente plus et reste constante malgré l'injection de fluide. Dans cette deuxième position, la précontrainte n'évolue plus et est réglée à une valeur adaptée à l'utilisateur. En outre, le piston reste sensiblement immobile.

Grâce à l'invention, lorsque le piston atteint la deuxième position, la précontrainte est maintenue à une valeur constante, de sorte que son réglage est interrompu, quand bien même du fluide continuerait d'être injecté par l'entrée principale de fluide. L'utilisateur n'est alors pas tenu d'ajuster la précontrainte par tâtonnement. Lorsque le piston est dans la deuxième position, la précontrainte est réglée précisément et l'utilisateur n'a pas besoin de réaliser des essais et ajustements manuels supplémentaires. De plus, dans la mesure où l'utilisateur monte sur le vélo lors du réglage, la précontrainte réglée est fonction de son poids.

En outre, l'invention permet de s'affranchir du risque d'introduire une pression de fluide trop importante dans la première chambre, ce qui contraindrait l'utilisateur à vider le fluide présent dans la première chambre avant d'injecter de nouveau du fluide via l'entrée principale de fluide.

La précontrainte de la suspension réglable selon l'invention peut donc être réglée rapidement et précisément.

L'utilisateur peut alors interrompre l'injection de fluide et fermer l'entrée principale de fluide et la sortie de fluide. L'utilisateur descend ensuite du vélo, de manière à ne plus exercer son poids sur la suspension. La suspension n'est alors plus contrainte par le poids de l'utilisateur. En raison de la pression du fluide présent dans la chambre principal, un effort est exercé sur le piston, tendant à déployer davantage le piston en l'éloignant du second fond. Le piston est amené dans une troisième position, formant une position de repos, dans laquelle ledit piston est sensiblement entièrement déployé.

Dès lors, lorsque l'utilisateur monte sur le vélo, le piston est translaté de la troisième position à la deuxième position et la course du piston entre ces troisième et deuxième positions correspond à la précontrainte réglée précédemment.

Avantageusement, le volume de la première chambre lorsque le piston est dans la première position est inférieur au volume de la première chambre lorsque le piston est dans la deuxième position. Le réglage de la suspension se fait par injection de fluide, en augmentant progressivement le volume de la première chambre de fluide pour faire passer le piston de la première position à la deuxième position. Aussi, il n'est pas nécessaire d'injecter une quantité excessive de fluide puis de libérer progressivement du fluide jusqu'à atteindre la précontrainte souhaité. Un intérêt est de limiter la quantité de fluide consommée.

Selon un aspect particulièrement avantageux de l'invention, le piston est configuré pour passer de la première position à la deuxième position lorsque du fluide est injecté par l'entrée principale de fluide. Le fluide injecté dans la première chambre déplace le piston de la première position à la deuxième position automatiquement, sans intervention supplémentaire de l'utilisateur. Un intérêt est de s'affranchir d'une étape d'ajustement manuel de la précontrainte. L'utilisateur peut régler le SAG à la valeur adaptée uniquement en injectant le fluide, de sorte le réglage de la précontrainte est facilité Le passage de la première position à la deuxième position se faut automatiquement par injection du fluide par l'entrée principale de fluide. Il n'est notamment pas nécessaire d'injecter une quantité de fluide excessive puis d'ouvrir une valve d'échappement pour libérer le fluide.

Grâce à l'invention, le réglage de la précontrainte est donc particulièrement rapide. En outre, le SAG est réglé précisément et maintenu à la valeur adaptée.

Préférentiellement, le corps de suspension comprend un orifice d'injection communiquant fluidiquement avec l'entrée principale de fluide et débouchant dans la première chambre, et un orifice d'évacuation communiquant fluidiquement avec la sortie de fluide et débouchant dans le corps de suspension.

Quelle que soit la position du piston, le fluide injecté par l'entrée principale de fluide est amené dans la première chambre via l'orifice d'injection.

Dans la deuxième position, la première chambre est en communication fluidique avec l'orifice d'évacuation. Le fluide injecté par l'entrée principale de fluide via l'orifice d'injection traverse alors l'orifice d'évacuation et est guidé vers la sortie de fluide, de manière à s'échapper de la suspension.

Avantageusement, le piston est mobile selon une direction de déplacement et l'orifice d'évacuation et l'orifice d'injection sont disposés en des positions distantes considérées selon ladite direction de déplacement. Le piston décrit par conséquent un mouvement de translation relatif par rapport à l'orifice d'évacuation.

L'orifice d'évacuation est de préférence disposé en une partie inférieure du corps de suspension tandis que l'orifice d'injection est disposé en une partie supérieure du corps de suspension.

Dans la première position, la tête de piston s'étend avantageusement entre l'orifice d'injection et l'orifice d'évacuation.

De préférence, l'orifice d'évacuation et/ou l'orifice d'injection sont ménagés dans une paroi latérale du corps de suspension. En variante, l'orifice d'injection peut être ménagé dans le premier fond du corps de suspension ou encore le second fond du corps de suspension, éventuellement formé par un élément connecté au corps de suspension.

De manière avantageuse, ledit orifice d'évacuation débouche dans une chambre d'évacuation communiquant fluidiquement avec la sortie de fluide. La chambre d'évacuation peut comprendre un conduit s'étendant entre l'orifice d'évacuation et la sortie de fluide. Cette chambre d'évacuation permet d'amener le fluide sortant du corps de suspension jusqu'à la sortie de fluide.

Selon une première variante avantageuse, l'orifice d'évacuation est configuré de manière à déboucher dans la deuxième chambre lorsque le piston est dans la première position et de manière à déboucher dans la première chambre lorsque le piston est dans la deuxième position.

Lorsque le piston est dans la première position, la tête de piston s'étend entre l'orifice d'injection et l'orifice d'évacuation. Elle forme alors dans le corps de suspension un bouchon hermétique empêchant le passage du fluide de la première chambre vers l'orifice d'évacuation, de sorte que le fluide injecté est maintenu dans la première chambre.

Lors du passage de la première position à la deuxième position, la tête de piston passe au-delà dudit orifice d'évacuation de sorte que l'orifice d'évacuation se trouve alors entre la tête de piston et l'orifice d'injection et débouche donc dans la première chambre.

Dans la deuxième position, l'entrée principale de fluide, la première chambre, l'orifice d'évacuation et la sortie de fluide sont en communication fluidique, de sorte que le fluide injecté par l'entrée principale de fluide est guidé jusqu'à la sortie de fluide.

Selon une deuxième variante avantageuse, l'orifice d'évacuation débouche dans la deuxième chambre et la tête de piston s'étend entre l'orifice d'évacuation et l'orifice d'injection lorsque le piston est dans la deuxième position. L'orifice d'évacuation débouche dans la deuxième chambre quelle que soit la position du piston.

Dans la première position du piston, la tête de piston forme un bouchon hermétique à l'intérieur du corps de suspension, empêchant le passage du fluide entre la première chambre et la deuxième chambre et donc entre l'entrée principale de fluide et la sortie de fluide.

De préférence, la suspension réglable comprend un canal de contournement configuré pour mettre les première et deuxième chambres en communication fluidique lorsque le piston est dans la deuxième position. Un intérêt est de mettre en communication fluidique la première chambre et la deuxième chambre et donc l'entrée principale de fluide et la sortie de fluide, lorsque le piston est dans la deuxième position. Un autre intérêt est d'équilibrer les pressions entre la première chambre et la deuxième chambre.

De manière non limitative, le canal de contournement peut être ménagé dans le corps de suspension ou dans le piston.

De manière avantageuse, le corps de suspension comprend une paroi interne et le canal de contournement est ménagé dans ladite paroi interne, la tête de piston étant positionnée au niveau du canal de contournement lorsque le piston est dans la deuxième position, de sorte que, dans cette deuxième position, les première et deuxième chambres sont en communication fluidique

La tête de piston présente avantageusement une épaisseur considérée selon la direction de déplacement du piston. De même, le canal de contournement présente avantageusement une longueur considérée selon ladite direction de déplacement du piston. La longueur du canal de contournement est de préférence supérieure à l'épaisseur de la tête de piston.

Aussi, lorsque le piston est dans la deuxième position et donc lorsque la tête de piston est disposée au niveau du canal de contournement, ledit canal de contournement débouche dans le corps de suspension, de part et d'autre de la tête de piston, respectivement dans la première chambre et dans la deuxième chambre. Ledit canal de contournement forme alors un passage permettant au fluide de contourner le piston et de passer de la première chambre à la deuxième chambre, afin d'être guidé vers la sortie de fluide. L'entrée principale de fluide et la sortie de fluide sont donc mises en communication fluidique.

Lorsque le piston est dans la première position, le canal de contournement s'étend dans la deuxième chambre de sorte qu'il ne permet pas la communication fluidique entre la première chambre et la deuxième chambre.

De préférence, considéré selon la direction de déplacement du piston, le canal de contournement s'étend entre l'orifice d'évacuation et l'orifice d'injection.

Avantageusement, la suspension réglable comprend en outre un dispositif de valve pouvant prendre un premier état dans lequel il empêche le fluide de s'échapper de la suspension, et un second état dans lequel il autorise l'extraction du fluide hors de la suspension.

On comprend que le dispositif de valve est placé dans le second état lors du réglage de la précontrainte, afin de permettre l'évacuation du fluide lorsque le piston est dans la deuxième position. Le dispositif de valve est avantageusement placé dans le premier état lorsque la précontrainte est réglée, de sorte que ce premier état correspond à un état de fonctionnement normal de la suspension, hors réglage. Dans ce premier état, le dispositif de fluide permet de maintenir le fluide dans la suspension de sorte que la précontrainte reste sensiblement constante et réglée à une valeur adaptée à l'utilisateur.

Préférentiellement, le dispositif de valve comprend une valve d'entrée disposée au niveau de l'entrée principale de fluide et une valve de sortie disposée au niveau de la sortie de fluide, lesdites valves d'entrée et de sortie étant configurées pour s'ouvrir lorsque le dispositif de valve est dans le second état et pour se fermer lorsque le dispositif de valve est dans le premier état.

Sans sortir du cadre de l'invention, la valve d'entrée peut être positionnée à proximité de l'entrée principale de fluide. De manière non limitative, elle peut être disposée dans un canal d'injection communiquant avec l'entrée principale de fluide et avec la première chambre.

Lorsque le dispositif de valve est placé dans le second état, les valves d'entrée et de sortie sont ouvertes toutes les deux. L'ouverture des valves d'entrée et de sortie peut être simultanée ou successive. Le fluide peut alors être injecté et peut s'échapper de la suspension. Lorsque le dispositif de valve est dans le premier état, les valves d'entrée et de sortie empêchent efficacement le fluide de s'échapper de la suspension via l'entrée principale de fluide et via la sortie de fluide. La précontrainte et maintenue d'autant plus efficacement à la valeur réglée.

De manière avantageuse, le dispositif de valve est conformé pour être amené dans le second état lorsqu'un fluide est injecté par l'entrée principale de fluide et pour être amené dans le premier état lorsque l'injection de fluide est interrompue.

Un intérêt est que l'utilisateur n'est pas tenu d'amener manuellement le dispositif de valve dans le second état lorsqu'il souhaite régler la précontrainte. En outre, l'utilisateur n'est pas non plus tenu d'amener manuellement le dispositif de valve dans le premier état lorsque la précontrainte est réglée. De plus, cette conformation permet de s'affranchir du risque d'oublier de ramener le dispositif de valve dans le premier état, ce qui nuirait au fonctionnement de la suspension.

L'invention porte également sur un procédé de réglage d'une suspension réglable telle que décrite précédemment, comprenant les étapes suivantes :
- on met la première chambre en communication fluidique avec l'atmosphère;
- on comprime la suspension de manière à évacuer le fluide de la première chambre et placer le piston dans la première position ; et
- on injecte le fluide dans la première chambre par l'entrée principale de fluide du corps de suspension de manière à déplacer le piston dans sa deuxième position, dans laquelle le fluide injecté par l'entrée principale de fluide est guidé vers la sortie de fluide ; et
- on interrompt l'injection de fluide et on ferme l'entrée principale de fluide et la sortie de fluide de sorte que le fluide reste dans la suspension

L'invention porte par ailleurs sur un vélo comportant au moins une suspension réglable telle que décrite précédemment.

### Brève description des dessins

[Fig. 1] La figure **1** est une vue en coupe d'un premier mode de réalisation de la suspension réglable selon l'invention ;
[Fig. 2]La figure **2** illustre un dispositif de distribution de fluide de la suspension réglable de la figure **1****,** dans lequel la valve de sortie est fermée;
[Fig. 3] La figure **3** illustre le dispositif de distribution de fluide de la suspension réglable de la figure **1****,** dans lequel la valve de sortie est ouverte ;
[Fig. 4] La figure **4** illustre la suspension réglable de la figure **1****,** le piston étant dans une première position ;
[Fig. 5] La figure **5** illustre la suspension réglable de la figure **1****,** le piston étant dans une deuxième position ;
[Fig. 6] La figure **6** illustre la suspension réglable de la figure **5** après interruption de l'injection de fluide;
[Fig. 7] La figure **7** illustre la suspension réglable de la figure **1****,** le piston étant placé dans une troisième position ;
[Fig. 8] La figure **8** est une vue en coupe d'un deuxième mode de réalisation de la suspension réglable selon l'invention, le piston étant placé dans une première position ;
[Fig.9] La figure **9** illustre la suspension réglable de la figure **8****,** le piston étant placé dans une deuxième position ; et
[Fig. 10] La figure **10** illustre un vélo muni d'une suspension réglable selon l'invention.

### Description des modes de réalisation

L'invention porte sur une suspension réglable d'un vélo dont la précontrainte peut être réglée facilement, en fonction du poids de l'utilisateur.

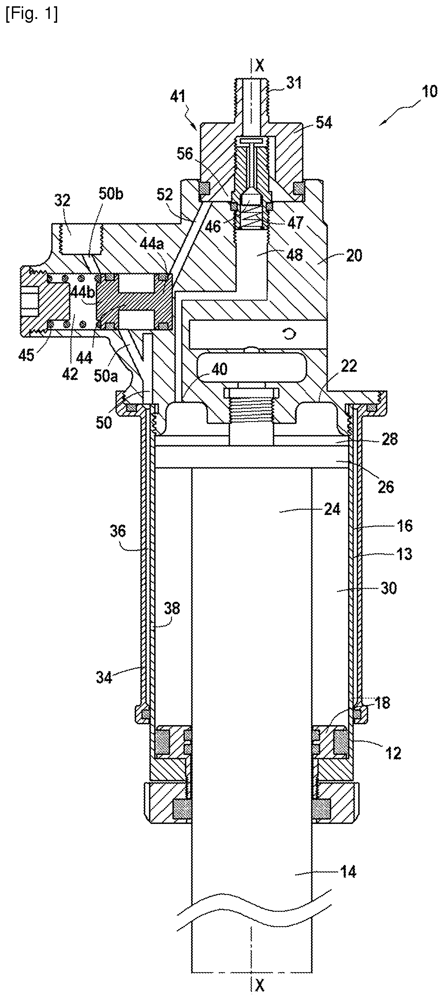

La figure **1** illustre une suspension réglable **10** conforme à la présente invention.

La suspension réglable **10** forme dans cet exemple non limitatif une suspension arrière de vélo. Elle comprend un corps de suspension **12** et un piston **14** disposé dans le corps de suspension.

Le corps de suspension **12** comprend un cylindre principal **13** délimitant une chambre principale. Il comprend une paroi latérale **16** un premier fond **18** en partie inférieure du corps de suspension. Le corps de suspension **12** comprend en outre un dispositif de distribution de fluide **20,** solidaire du cylindre principal **13** et délimitant un second fond **22** en partie supérieure dudit corps de suspension.

Sur cette figure **1****,** on constate que le piston **14** comprend une tige de piston **24** et une tête de piston **26** solidaire de la tige de piston. On remarque que le piston **14** est disposé à l'intérieur du cylindre principal **13** du corps de suspension **12** et délimite avec le second fond **22** une première chambre **28** à l'intérieur dudit corps de suspension **12.** La tête de piston **26** délimite en outre une deuxième chambre **30** avec le premier fond **18,** à l'intérieur du corps de suspension **12.** La tige de piston **26** s'étend selon une direction de déplacement **X** dans le corps de suspension, de sorte que le piston **14** est monté coulissant selon cette direction de déplacement **X** à l'intérieur du corps de suspension **12.**

Le dispositif de distribution de fluide **20** est solidaire du cylindre principal. Dans cet exemple non limitatif, le dispositif de distribution de fluide et le cylindre principal **13** forment deux pièces distinctes, le dispositif de distribution de fluide étant solidarisé en une partie supérieure du cylindre. En variante, le corps de suspension peut former un ensemble monobloc.

Le corps de suspension **12** comprend une entrée principale de fluide **31** disposée en partie supérieure dudit corps de suspension. Le corps de suspension comprend également une sortie de fluide **32** disposée sur le dispositif de distribution de fluide **20.** La sortie de fluide **32** débouche hors de la suspension réglable **10.**

La suspension réglable **10** comprend par ailleurs un cylindre secondaire **34,** à l'intérieur duquel s'étend le cylindre principal **13** et définissant avec la paroi latérale **16** une chambre d'évacuation **36.** La chambre d'évacuation **36** est en communication fluidique avec la sortie de fluide **32.**

Le corps de suspension comprend un orifice d'évacuation **38** ménagé dans la paroi latérale **16** dudit corps de suspension **12,** de sorte que ledit orifice d'évacuation **38** débouche à l'intérieur du cylindre principal **13** du corps de suspension et dans la chambre d'évacuation **36.** L'orifice d'évacuation **38** est en communication fluidique avec la sortie de fluide **32.**

Le corps de suspension **12** comprend pas ailleurs un orifice d'injection **40,** ménagé dans le dispositif de distribution de fluide **20** et débouchant dans la première chambre **28** du corps de suspension **12.**

L'orifice d'injection **40** est en communication fluidique avec l'entrée principale de fluide **31.**

Le dispositif de distribution de fluide **20** comprend une cavité de valve **42** cylindrique, ménagé dans ledit dispositif de distribution de fluide **20.** Le dispositif de distribution de fluide comprend par ailleurs un canal d'injection **48,** un canal d'évacuation **50** et un canal de valve **52.**

Le canal d'injection **48** est ménagé dans le dispositif de distribution de fluide **20.** Il débouche dans la première chambre **28** via l'orifice d'injection **40.** Dans cet exemple non limitatif, le canal d'injection **48** comprend trois segments de canal.

Le dispositif de distribution de fluide **20** comprend en outre un dispositif de valve **41** comprenant une valve d'entrée **46,** formant une valve anti-retour, munie d'un ressort. La valve d'entrée **46** est montée coulissante dans le canal d'injection au niveau de l'entrée principale de fluide **31.** La valve d'entrée **46** peut prendre une position fermée, illustrée en figure **1****,** dans laquelle elle empêche un fluide de pénétrer ou de s'échapper du canal d'injection **48** et donc de la première chambre **28** et une position ouverte dans laquelle elle permet l'introduction d'un fluide dans le canal d'injection **48** et dans la première chambre **28.** Le premier ressort **47** tend à amener la valve d'entrée **46** en position fermée. La valve d'entrée est en outre configurée pour s'ouvrir et permettre l'entrée du fluide dans la première chambre **28** lorsque la pression dudit fluide en amont de ladite valve anti-retour est supérieure à un seuil de pression prédéterminé.

Le canal d'évacuation **50** est en communication fluidique avec la chambre d'évacuation **36** et avec l'extérieur de la suspension. Le canal d'évacuation traverse la cavité de valve **42,** de sorte qu'il comprend une première portion de canal d'évacuation **50a** débouchant dans la chambre d'évacuation **36** et dans la cavité de valve **42** et une seconde portion de canal d'évacuation **50b** débouchant dans la cavité de valve **42** et hors de la suspension.

Le dispositif de valve **41** comprend une valve de sortie **44** munie d'un second ressort **45** et monté coulissante dans la cavité de valve **42,** selon un axe de coulissement Y. La valve de sortie **44** comprend une première partie de valve cylindrique **44a** et une seconde partie de valve cylindrique **44b.** La valve de sortie **44** peut prendre une position fermée, illustrée en figure **1****,** dans laquelle elle empêche un fluide de s'échapper du corps de suspension **12** et de la suspension **10,** et une position ouverte dans laquelle elle permet au fluide de s'échapper du corps de suspension **12** et de la suspension **10.** Le second ressort **45** tend à amener la valve de sortie en position fermée. La valve de sortie **44** est en outre configurée pour s'ouvrir lorsque la pression dudit fluide en amont de ladite valve de sortie est supérieure à un seuil de pression prédéterminé.

Dans cet exemple non limitatif, le corps de suspension **12** comprend en outre un bouchon amovible **54** monté à l'extrémité supérieur du dispositif de distribution de fluide **20** et dans lequel est ménagée l'entrée principale de fluide **31.** Un logement intérieur **56** est ménagé dans ce bouchon amovible **54.** Le canal de valve **52** débouche d'une part dans la cavité de valve **42** et d'autre part dans le logement intérieur **56** du bouchon **54.**

A l'aide des figures **1**à **7****,** nous allons détailler les étapes de réglage de la précontrainte de la suspension réglable **10** décrite précédemment.

Dans un premier temps, la première chambre **28** est sensiblement vidée de fluide, par exemple en retirant le bouchon amovible **54.** L'utilisateur monte alors sur le vélo, de manière à comprimer la suspension réglable.

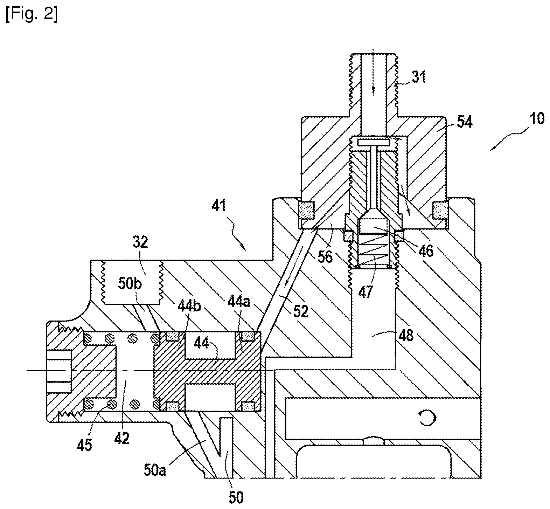

Tant qu'aucun fluide n'est injecté, le dispositif de valve **41** est placé dans un premier état, dans lequel la valve d'entrée **46** et la valve de sortie **44** sont fermées, tel qu'illustré en figure **2****.** Dans la position fermée, la valve de sortie obture le canal de valve **52.** En outre, dans la position fermée, la valve de sortie **44** est disposé de sorte que la première portion de canal d'évacuation **50a** et la seconde portion de canal d'évacuation **50b** débouchent de part et d'autre de ladite seconde partie de valve cylindrique **44b.** La seconde partie de valve cylindrique **44b** forme un obturateur dans la cavité de valve **42** empêchant le fluide provenant de la première portion de canal d'évacuation **50a** d'être amenée dans la seconde portion de canal d'évacuation **50b** et donc de s'échapper de la suspension.

Dans cet exemple non limitatif, l'utilisateur connecte alors le bouchon amovible **54** à la suspension.

L'utilisateur injecte ensuite un fluide, par exemple un gaz tel que du dioxyde de carbone, par l'entrée principale de fluide **31** disposée sur le bouchon amovible **54,** comme illustré en figure **2****.** Le fluide peut être contenu dans une cartouche. En variante, l'utilisateur peut connecter une pompe à l'entrée principale de fluide. La circulation du fluide est illustrée par des flèches. Le fluide pénètre alors dans le logement **56** du bouchon amovible. La pression du fluide injecté, en amont de la valve d'entrée **46** du dispositif de valve **41,** est insuffisante pour permettre l'ouverture de la valve d'entrée **46** et donc l'entrée du fluide dans la chambre principal **28.** Le fluide est guidé par le canal de valve **52** vers la cavité de valve **42.**

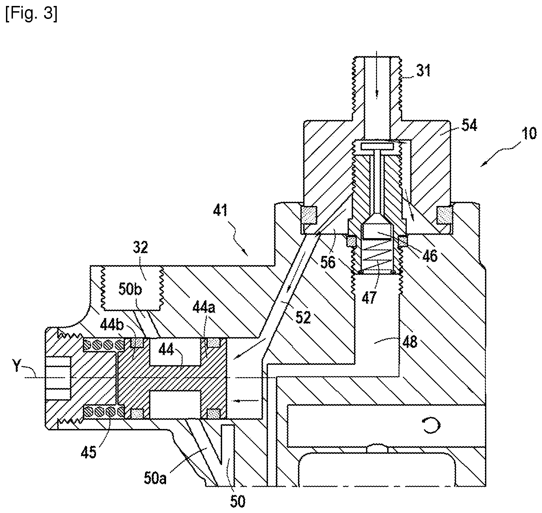

Le dispositif de valve étant dans un premier état, la valve de sortie est fermée. L'injection de fluide a pour conséquence de déplacer la valve de sortie **44** selon l'axe de coulissement **Y,** jusqu'en position ouverte illustrée en figure **3****.** L'injection de fluide permet de maintenir la valve de sortie **44** en position ouverte

Dans cette position ouverte, le second ressort **45** est comprimé. La première portion de canal d'évacuation **50a** et la seconde portion de canal d'évacuation **50b** débouchent d'un même côté de la seconde partie de valve cylindrique **44b** et sont donc en communication fluidique.

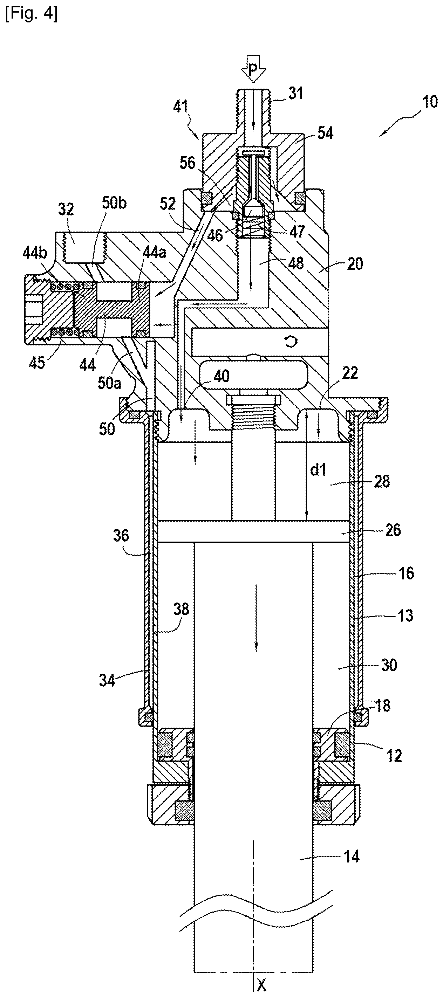

L'injection de fluide est poursuivie de sorte que la pression au sein du canal de valve **52** et du logement **56** ménagé dans le bouchon amovible **54** augmente peu à peu. Lorsque la pression dans le canal de valve **52,** dans le logement **56** et donc en amont de la valve d'entrée **46** devient supérieure au seuil de pression prédéterminé d'ouverture de ladite valve d'entrée **46,** cette dernière s'ouvre et permet l'entrée du fluide dans le canal d'injection **48** puis dans la première chambre **28.** Cette étape est illustrée en figure **4****.** Les valves d'entrée et sortie **46,44** sont alors ouvertes. Le dispositif de valve **41** est donc amené automatiquement dans un second état par injection de fluide via l'entrée principale de fluide **28.** Dans ce second état, le dispositif de valve **41** autorise l'extraction du fluide hors de la suspension.

La pression dans la première chambre **28** augmente en raison du fluide y pénétrant.

La figure **4** illustre le piston dans une première position, dans laquelle la tête de piston **26** est disposée à une distance **d1** du second fond **22** du corps de suspension **12.** En outre, l'orifice d'évacuation **38** débouche dans la deuxième chambre **30,** de sorte que la sortie de fluide **32** communique fluidiquement avec la deuxième chambre **30** mais pas avec la première chambre **28.** Aussi, le fluide injecté par l'entrée principale de fluide **31** dans la première chambre **28** exerce un effort sur la tête du piston **26,** orienté selon la direction de déplacement, dans une direction opposée à l'entrée principale de fluide **31.** Le piston **14** est déplacé dans le corps de suspension **12** dans ladite direction, selon la direction de déplacement **X** et est déployé. Le volume de la première chambre augmente. La distance entre le second fond **22** du corps de suspension **12** et la tête de piston **26** augmente. Aussi, le volume de la première chambre **28** augmente.

Comme on le remarque par le passage de la figure **4** à la figure **5****,** le piston **14** est déplacé, jusqu'à ce que la tête de piston **26** passe au-delà de l'orifice d'évacuation **38.** Dès lors, l'orifice d'évacuation **38** ne débouche plus dans la deuxième chambre **30** mais dans la première chambre **28.** Le piston **14** est alors placé dans une deuxième position dans laquelle la tête de piston **26** et le second fond **22** du corps de suspension sont séparés d'une distance **d2** supérieure à la distance initiale **d1.**

Grâce à l'invention, le piston **14** passe donc de la première position à la deuxième position automatiquement, par injection continue de fluide par l'entrée principale de fluide **31.**

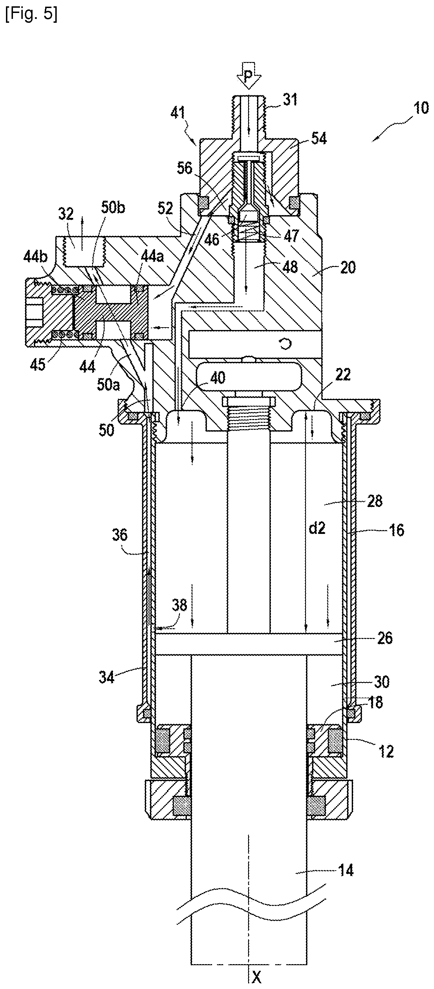

Dans cette deuxième position du piston **14,** illustrée en figure **5****,** la sortie de fluide **32** est en communication fluidique avec la première chambre **28.** Le fluide injecté par l'entrée principale de fluide **31** est amené dans la première chambre **28** puis dans la chambre d'évacuation via l'orifice d'évacuation. Le fluide est alors amené dans la première portion de canal d'évacuation **50a,** dans la cavité de valve **42** puis dans la seconde portion de canal d'évacuation **50b** et est enfin guidé hors de la suspension réglable **10** via la sortie de fluide **32.**

Dans cette deuxième position du piston **14,** l'entrée principale de fluide **31** est en communication fluidique avec la sortie de fluide **32** de sorte que le fluide injecté est évacué hors de la suspension réglable **10** par ladite sortie de fluide. En conséquence, la pression au sein de la première chambre **28** n'augmente plus et le piston **24** n'est plus déplacé dans le corps de suspension **12,** malgré l'injection du fluide.

La précontrainte de la suspension est alors réglée et n'évolue plus, malgré la poursuite de l'injection de fluide par l'entrée principale de fluide **31.** Aussi, grâce à l'invention, la précontrainte est réglée très facilement, en injectant le fluide de manière continue par l'entrée principale de fluide **28.** L'utilisateur n'est pas tenu d'ajuster la précontrainte manuellement, par exemple par tâtonnement.

Dans la mesure où l'utilisateur est placé sur le vélo lors du réglage, la deuxième position du piston **14** est conditionnée par le poids de l'utilisateur. Aussi, la précontrainte, ou SAG, est réglée est fonction du poids de l'utilisateur.

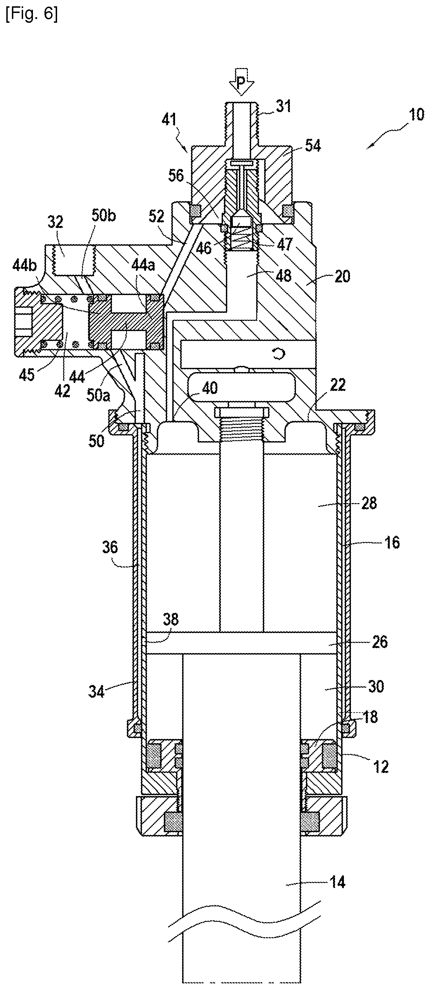

Comme illustrée en figure **6****,** l'utilisateur interrompt alors l'injection de fluide, qui n'exerce plus d'effort sur les valves d'entrée et de sortie. Le premier ressort **47** amène la valve d'entrée en position fermée et le second ressort **45** amène la valve de sortie en position fermée. L'interruption de l'injection de fluide amène donc automatiquement le dispositif de valve **41** dans le premier état dans lequel il empêche le fluide de s'échapper de la suspension.

En outre, la pression dans la première chambre diminue légèrement de sorte que le piston est légèrement déplacé vers l'entrée principale de fluide. L'orifice d'évacuation **38** est alors disposé au niveau de la tête de piston **26** et ne débouche plus dans la première chambre **28.** La tête de piston **26** obture l'orifice d'évacuation de sorte que le fluide ne s'échappe pas de la première chambre.

L'utilisateur peut alors descendre du vélo. En raison de la pression exercée par le fluide présent au sein de la première chambre **28** et du retrait du poids de l'utilisateur, le piston **14** est déployé davantage jusqu'en une troisième position, qui correspond à une position de repos de la suspension réglable.

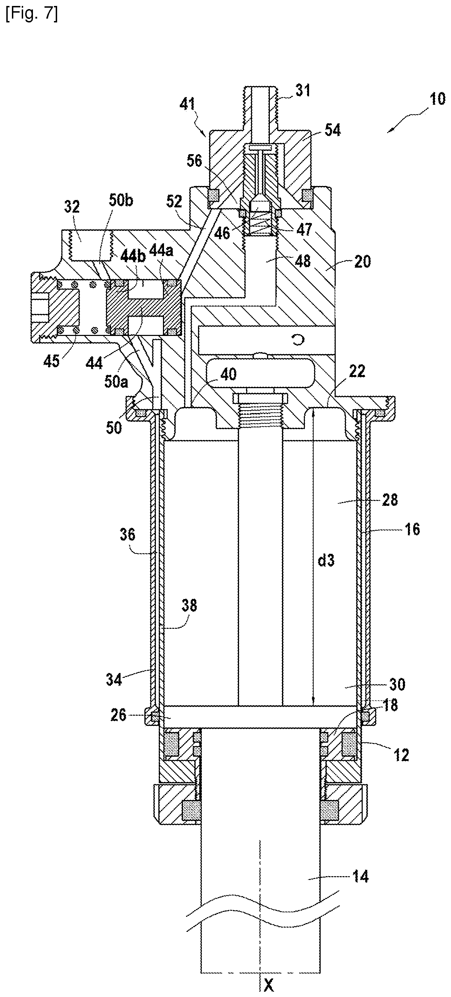

Dans cette troisième position, illustrée en figure **7****,** la tête de piston **26** et le second fond **22** du corps de suspension **12** sont séparés d'une distance **d3** supérieure à la distance initiale **d1** et à la distance **d2**. La course du piston **14** entre ces deuxième et troisième positions correspond à la précontrainte réglée précédemment. Dans cet exemple non limitatif, la tête de piston **26** est sensiblement en contact avec le premier fond **18.** Sans sortir du cadre de l'invention, dans la troisième position, une quantité de fluide peut subsister dans la deuxième chambre **30;** de sorte que le volume de la deuxième chambre est non nul et que la tête de piston est maintenue à distance du premier fond.

L'utilisateur peut alors détacher le bouchon amovible **54** du corps de suspension **12,** ce qui a pour conséquence de mettre le canal de valve **52** en communication fluidique avec l'atmosphère. Un intérêt est de vider le fluide éventuellement présent dans le canal de valve **52.** La valve d'entrée **46**, qui est fermée, maintient le fluide présent dans la première chambre **28.** L'encombrement et le poids de la suspension sont donc réduits par le retrait du bouchon amovible **56.**

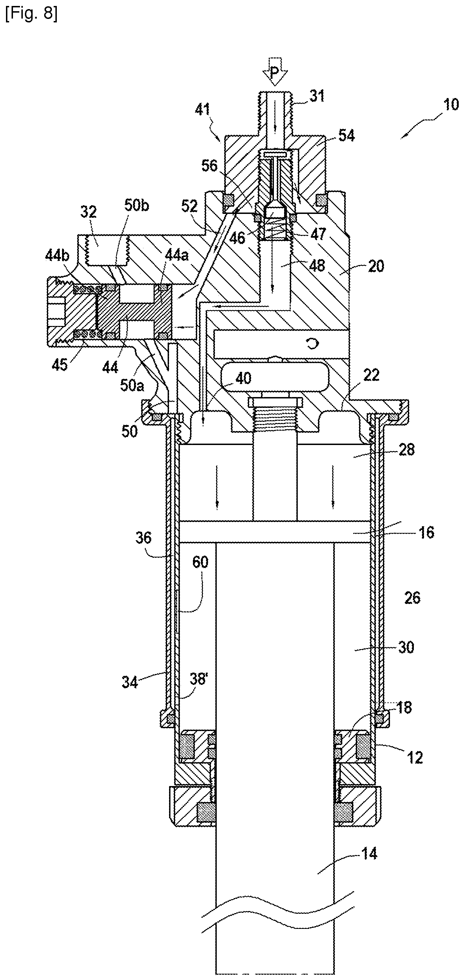

La figure **8** illustre un deuxième mode de réalisation de la suspension réglable selon l'invention. Dans ce deuxième mode de réalisation, l'orifice d'évacuation **38'** est disposé à proximité du premier fond **18.** Le corps de suspension comprend en outre un canal de contournement **60** ménagé dans sa paroi latérale **16.** Considérée selon la direction de déplacement **X** du piston **14,** le canal de contournement **60** présente une longueur supérieure à l'épaisseur de la tête de piston, également considérée selon cette direction.

Lorsque le piston **14** est dans la première position et dans la deuxième position, l'orifice d'évacuation **38'** débouche dans la deuxième chambre, de sorte que la tête de piston s'étend entre l'orifice d'évacuation **38'** et l'orifice d'injection **40.**

Le canal de contournement **60** est positionné de sorte que lorsque le piston **14** est dans la première position, illustrée en figure **8****,** la tête de piston **26** s'étend entre l'orifice d'injection **40** et le canal de contournement **60.** Aussi, dans la première position du piston **14,** le canal de contournement **60** débouche dans la deuxième chambre **30** mais pas dans la première chambre **28.** L'injection de fluide a pour conséquence de déployer le piston, comme dans le premier mode de réalisation, jusqu'en une deuxième position.

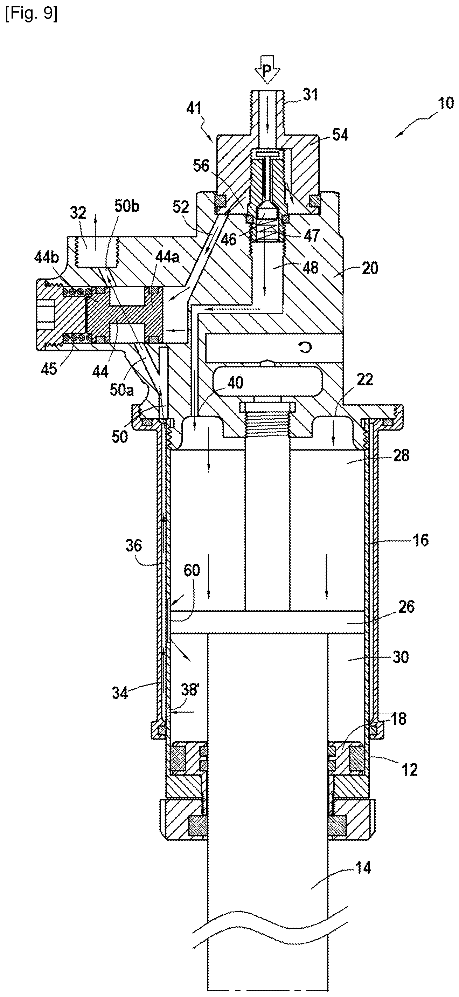

Lorsque le piston **14** est dans la deuxième position, illustrée en figure **9****,** la tête de piston **26** est disposée au niveau du canal de contournement **60,** de sorte que ledit canal de contournement débouche dans le corps de suspension **12,** de part et d'autre de la tête de piston, respectivement dans la première chambre **28** et dans la deuxième chambre **30.** Ledit canal de contournement forme alors un passage permettant au fluide de contourner la tête de piston **26** et de passer de la première chambre à la deuxième chambre. La première chambre et la deuxième chambre sont alors en communication fluidique.

Aussi, comme illustré en figure **9****,** lorsque le piston est dans la deuxième position, le fluide injecté par l'entrée principale de fluide **31** passe de la première chambre à la deuxième chambre puis est guidé vers la sortie de fluide via l'orifice d'évacuation **38',** la chambre d'évacuation **36,** le canal d'évacuation **50** et la cavité de valve **42.**

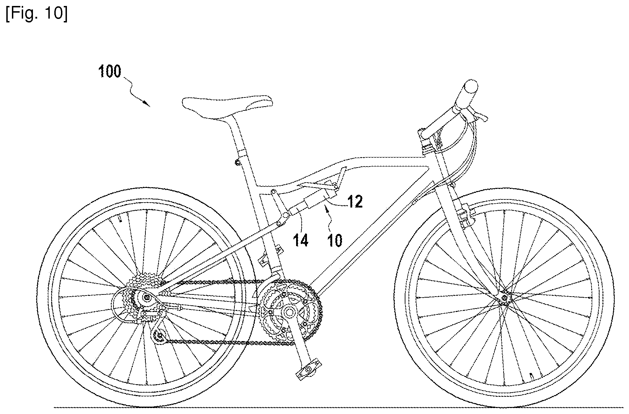

La figure **10** illustre un vélo **100** muni d'une suspension réglable **10** selon l'invention. Dans cet exemple non limitatif, la suspension réglable est une suspension arrière du vélo.

## Revendications

1. Suspension réglable (10) pour un vélo, comprenant :
- un corps de suspension (12) muni d'une entrée principale de fluide (31) configurée pour injecter un fluide dans le corps de suspension, et d'une sortie de fluide (32) ;
- un piston (14) disposé dans le corps de suspension et comprenant une tête de piston (26) délimitant une première chambre (28) et une deuxième chambre (30) à l'intérieur dudit corps de suspension, la première chambre étant en communication fluidique avec l'entrée principale de fluide, le piston étant mobile en translation dans le corps de suspension entre :
au moins une première position dans laquelle la sortie de fluide communique fluidiquement avec la deuxième chambre mais pas avec la première chambre, de manière à déployer le piston, et
au moins une deuxième position dans laquelle la sortie de fluide est en communication fluidique avec la première chambre de sorte que le fluide injecté par l'entrée principale de fluide est guidé vers la sortie de fluide, afin d'évacuer le fluide injecté hors de la suspension, le piston (14) étant configuré pour passer de la première position à la deuxième position lorsque du fluide est injecté par l'entrée principale de fluide (31) ; et
- un dispositif de valve (41) pouvant prendre un premier état dans lequel il empêche le fluide de s'échapper de la suspension, et un second état dans lequel il autorise l'extraction du fluide hors de la suspension, **caractérisé en ce que** le dispositif de valve (41) est conformé pour être amené dans le second état lorsqu'un fluide est injecté par l'entrée principale de fluide (31) et pour être amené dans le premier état lorsque l'injection de fluide est interrompue.

2. Suspension réglable selon la revendication **1,** dans laquelle le volume de la première chambre (28), lorsque le piston (14) est dans la première position, est inférieur au volume de la première chambre lorsque le piston est dans la deuxième position.

3. Suspension réglable selon la revendication **1** ou **2,** dans laquelle le corps de suspension (12) comprend un orifice d'injection (40) communiquant fluidiquement avec l'entrée principale de fluide (31) et débouchant dans la première chambre (28), et un orifice d'évacuation (38) communiquant fluidiquement avec la sortie de fluide (32) et débouchant dans le corps de suspension.

4. Suspension réglable selon la revendication **3,** dans laquelle le piston (14) est mobile selon une direction de déplacement (X), et dans laquelle l'orifice d'évacuation (38) et l'orifice d'injection (40) sont disposés en des positions distantes considérées selon ladite direction de déplacement.

5. Suspension réglage selon la revendication **4,** dans laquelle l'orifice d'évacuation (38) et/ou l'orifice d'injection (40) sont ménagés dans une paroi latérale du corps de suspension.

6. Suspension réglable selon l'une quelconque des revendications **3** à **5,** dans laquelle ledit orifice d'évacuation (38) débouche dans une chambre d'évacuation (36) communiquant fluidiquement avec la sortie de fluide (32).

7. Suspension réglable selon l'une quelconque des revendications **3** à **6,** dans laquelle l'orifice d'évacuation (38) est configuré de manière à déboucher dans la deuxième chambre (30) lorsque le piston (14) est dans la première position, et de manière à déboucher dans la première chambre (28) lorsque le piston est dans la deuxième position.

8. Suspension réglable selon l'une quelconque des revendications **3** à **6,** dans laquelle l'orifice d'évacuation (38') débouche dans la deuxième chambre (30), et dans laquelle la tête de piston (26) s'étend entre l'orifice d'évacuation (38') et l'orifice d'injection (40) lorsque le piston (14) est dans la deuxième position.

9. Suspension réglable selon la revendication **8,** comprenant un canal de contournement (60) configuré pour mettre les première et deuxième chambres (28,30) en communication fluidique lorsque le piston (14) est dans la deuxième position.

10. Suspension réglable selon la revendication **9,** dans laquelle le corps de suspension (12) comprend une paroi interne (16), et dans laquelle le canal de contournement (60) est ménagé dans ladite paroi interne, la tête de piston (26) étant positionnée au niveau du canal de contournement lorsque le piston (14) est dans la deuxième position, de sorte que, dans cette deuxième position, les première et deuxième chambres (28,30) sont en communication fluidique.

11. Suspension réglable selon la revendication **4** en combinaison avec la revendication **9** ou **10,** dans laquelle, considéré selon la direction de déplacement (X) du piston (14), le canal de contournement (60) s'étend entre l'orifice d'évacuation (38') et l'orifice d'injection (40).

12. Suspension réglable selon l'une quelconque des revendications **1 à 11,** dans lequel le dispositif de valve (41) comprend une valve d'entrée (46) disposée au niveau de l'entrée principale de fluide (31) et une valve de sortie (44) disposée au niveau de la sortie de fluide (32), lesdites valves d'entrée et de sortie étant configurées pour s'ouvrir lorsque le dispositif de valve est dans le second état et pour se fermer lorsque le dispositif de valve est dans le premier état.

13. Suspension réglable selon l'une quelconque des revendications **1** à **12,** dans laquelle le fluide est un gaz, par exemple du dioxyde de carbone.

14. Procédé de réglage d'une suspension réglable (10) pour
un vélo, comprenant :
- un corps de suspension (12) muni d'une entrée principale de fluide (31) configurée pour injecter un fluide dans le corps de suspension, et d'une sortie de fluide (32) ;
- un piston (14) disposé dans le corps de suspension et comprenant une tête de piston (26) délimitant une première chambre (28) et une deuxième chambre (30) à l'intérieur dudit corps de suspension, la première chambre étant en communication fluidique avec l'entrée principale de fluide, le piston étant mobile en translation dans le corps de suspension entre :
au moins une première position dans laquelle la sortie de fluide communique fluidiquement avec la deuxième chambre mais pas avec la première chambre, de manière à déployer le piston, et
au moins une deuxième position dans laquelle la sortie de fluide est en communication fluidique avec la première chambre de sorte que le fluide injecté par l'entrée principale de fluide est guidé vers la sortie de fluide, afin d'évacuer le fluide injecté hors de la suspension, le procédé comprenant les étapes suivantes :
- on met la première chambre (28) en communication fluidique avec l'atmosphère;
- on comprime la suspension de manière à évacuer le fluide de la première chambre et placer le piston (14) dans la première position ; et
- on injecte le fluide dans la première chambre par l'entrée principale de fluide (31) du corps de suspension (12) de manière à déplacer le piston dans sa deuxième position, dans laquelle le fluide injecté par l'entrée principale de fluide est guidé vers la sortie de fluide (32) ; et
- on interrompt l'injection de fluide et on ferme l'entrée principale de fluide et la sortie de fluide de sorte que le fluide reste dans la suspension.

15. Vélo comportant au moins une suspension réglable (10) selon l'une quelconque des revendications **1** à **13.**

## Patentansprüche

1. Einstellbare Federung (10) für ein Fahrrad, umfassend:
- einen Federungskörper (12), der mit einem Hauptfluideinlass (31), der konfiguriert ist, um ein Fluid in den Federungskörper einzuleiten, und einem Fluidauslass (32) versehen ist;
- einen Kolben (14), der in dem Federungskörper angeordnet ist und einen Kolbenboden (26) umfasst, der eine erste Kammer (28) und eine zweite Kammer (30) innerhalb des Federungskörpers begrenzt, wobei die erste Kammer in Fluidverbindung mit dem Hauptfluideinlass ist, wobei der Kolben in dem Federungskörper translatorisch bewegbar ist zwischen:
mindestens einer ersten Position, in der der Fluidauslass mit der zweiten Kammer, aber nicht mit der ersten Kammer in Fluidverbindung ist, um den Kolben auszufahren, und
mindestens einer zweiten Position, in der der Fluidauslass mit der ersten Kammer in Fluidverbindung ist, sodass das durch den Hauptfluideinlass eingeleitete Fluid zu dem Fluidauslass geleitet wird, um das eingeleitete Fluid aus der Federung zu entfernen, wobei der Kolben (14) konfiguriert ist, um sich von der ersten Position zu der zweiten Position zu bewegen, wenn Fluid durch den Hauptfluideinlass (31) eingeleitet wird; und
- eine Ventilvorrichtung (41), die einen ersten Zustand, in dem sie verhindert, dass das Fluid aus der Federung austritt, und einen zweiten Zustand, in dem sie zulässt, dass das Fluid aus der Federung extrahiert wird, annehmen kann, **dadurch gekennzeichnet, dass** die Ventilvorrichtung (41) ausgebildet ist, um in den zweiten Zustand gebracht zu werden, wenn ein Fluid durch den Hauptfluideinlass (31) eingeleitet wird, und um in den ersten Zustand gebracht zu werden, wenn das Einleiten von Fluid unterbrochen wird.

2. Einstellbare Federung nach Anspruch 1, wobei das Volumen der ersten Kammer (28), wenn der Kolben (14) in der ersten Position ist, kleiner ist als das Volumen der ersten Kammer, wenn der Kolben in der zweiten Position ist.

3. Einstellbare Federung nach Anspruch 1 oder 2, wobei der Federungskörper (12) eine Einleitöffnung (40) in Fluidverbindung mit dem Hauptfluideinlass (31) und die in die erste Kammer (28) öffnet, und eine Evakuierungsöffnung (38) in Fluidverbindung mit dem Fluidauslass (32) und die in den Federungskörper öffnet, umfasst.

4. Einstellbare Federung nach Anspruch 3, wobei der Kolben (14) entlang einer Bewegungsrichtung (X) bewegbar ist, und wobei die Evakuierungsöffnung (38) und die Einleitöffnung (40) betrachtet entlang der Bewegungsrichtung an beabstandeten Positionen angeordnet sind.

5. Einstellbare Federung nach Anspruch 4, wobei die Evakuierungsöffnung (38) und/oder die Einleitöffnung (40) in einer Seitenwand des Federungskörpers ausgebildet sind.

6. Einstellbare Federung nach einem der Ansprüche 3 bis 5, wobei die Evakuierungsöffnung (38) in eine Evakuierungskammer (36) mündet, die mit dem Fluidauslass (32) in Fluidverbindung ist.

7. Einstellbare Federung nach einem der Ansprüche 3 bis 6, wobei die Evakuierungsöffnung (38) konfiguriert ist, um in die zweite Kammer (30) zu münden, wenn der Kolben (14) in der ersten Position ist, und um in die erste Kammer (28) zu münden, wenn der Kolben in der zweiten Position ist.

8. Einstellbare Federung nach einem der Ansprüche 3 bis 6, wobei die Evakuierungsöffnung (38') in die zweite Kammer (30) mündet, und wobei sich der Kolbenboden (26) zwischen der Evakuierungsöffnung (38') und der Einleitöffnung (40) erstreckt, wenn der Kolben (14) in der zweiten Position ist.

9. Einstellbare Federung nach Anspruch 8, umfassend einen Umgehungskanal (60), der konfiguriert ist, um die erste und die zweite Kammer (28, 30) in Fluidverbindung zu bringen, wenn der Kolben (14) in der zweiten Position ist.

10. Einstellbare Federung nach Anspruch 9, wobei der Federungskörper (12) eine Innenwand (16) umfasst, und wobei der Umgehungskanal (60) in der Innenwand ausgebildet ist, wobei der Kolbenboden (26) an dem Umgehungskanal positioniert ist, wenn der Kolben (14) in der zweiten Position ist, sodass die erste und die zweite Kammer (28, 30) in dieser zweiten Position in Fluidverbindung sind.

11. Einstellbare Federung nach Anspruch 4 in Verbindung mit Anspruch 9 oder 10, wobei sich der Umgehungskanal (60), betrachtet entlang der Bewegungsrichtung (X) des Kolbens (14), zwischen der Evakuierungsöffnung (38') und der Einleitöffnung (40) erstreckt.

12. Einstellbare Federung nach einem der Ansprüche 1 bis 11, wobei die Ventilvorrichtung (41) ein Einlassventil (46), das an dem Hauptfluideinlass (31) angeordnet ist, und ein Auslassventil (44), das an dem Fluidauslass (32) angeordnet ist, umfasst, wobei das Einlass- und das Auslassventile konfiguriert sind, um zu öffnen, wenn die Ventilvorrichtung in dem zweiten Zustand ist, und zu schließen, wenn die Ventilvorrichtung in dem ersten Zustand ist.

13. Einstellbare Federung nach einem der Ansprüche 1 bis 12, in der das Fluid ein Gas ist, z. B. Kohlendioxid.

14. Verfahren zum Einstellen einer einstellbaren Federung (10) für ein Fahrrad, umfassend:
- einen Federungskörper (12), der mit einem Hauptfluideinlass (31), der konfiguriert ist, um ein Fluid in den Federungskörper einzuleiten, und einem Fluidauslass (32) versehen ist;
- einen Kolben (14), der in dem Federungskörper angeordnet ist und einen Kolbenboden (26) umfasst, der eine erste Kammer (28) und eine zweite Kammer (30) innerhalb des Federungskörpers begrenzt, wobei die erste Kammer in Fluidverbindung mit dem Hauptfluideinlass ist, wobei der Kolben in dem Federungskörper translatorisch bewegbar ist zwischen:
mindestens einer ersten Position, in der der Fluidauslass mit der zweiten Kammer, aber nicht mit der ersten Kammer in Fluidverbindung ist, um den Kolben auszufahren, und
mindestens einer zweiten Position, in der der Fluidauslass mit der ersten Kammer in Fluidverbindung ist, sodass das durch den Hauptfluideinlass eingeleitete Fluid zu dem Fluidauslass geleitet wird, um das eingeleitete Fluid aus der Federung zu entfernen, das Verfahren umfassend die folgenden Schritte:
- die erste Kammer (28) wird in Fluidverbindung mit der Atmosphäre gebracht;
- die Federung wird komprimiert, um das Fluid aus der ersten Kammer zu evakuieren und den Kolben (14) in die erste Position zu bringen; und
- das Fluid wird durch den Hauptfluideinlass (31) des Federungskörpers (12) in die erste Kammer eingeleitet, um den Kolben in seine zweite Position zu bewegen, in der das durch den Hauptfluideinlass eingeleitete Fluid zu dem Fluidauslass (32) geleitet wird; und
- die wird Fluideinleitung unterbrochen und der Hauptfluideinlass und der Fluidauslass werden geschlossen, sodass das Fluid in der Federung verbleibt.

15. Fahrrad, umfassend mindestens eine einstellbare Federung (10) nach einem der Ansprüche 1 bis 13.

## Claims

1. An adjustable suspension (10) for a bicycle, comprising:
- a suspension body (12) provided with a main fluid inlet (31) configured to inject a fluid into the suspension body, and with a fluid outlet (32);
- a piston (14) disposed in the suspension body and comprising a piston head (26) delimiting a first chamber (28) and a second chamber (30) inside said suspension body, the first chamber being in fluid communication with the main fluid inlet, the piston being movable in translation in the suspension body between:
at least one first position in which the fluid outlet fluidly communicates with the second chamber but not with the first chamber, so as to deploy the piston, and
at least one second position in which the fluid outlet is in fluid communication with the first chamber so that the fluid injected through the main fluid inlet is guided to the fluid outlet, in order to evacuate the injected fluid from the suspension, the piston (14) being configured to move from the first position to the second position when fluid is injected through the main fluid inlet (31); and
- a valve device (41) which can assume a first state in which it prevents fluid from escaping from the suspension, and a second state in which it allows the extraction of the fluid from the suspension,
**characterized in that** the valve device (41) is configured to be brought into the second state when a fluid is injected through the main fluid inlet (31) and to be brought into the first state when the fluid injection is interrupted

2. The adjustable suspension according to claim **1,** wherein the volume of the first chamber (28), when the piston (14) is in the first position, is less than the volume of the first chamber when the piston is in the second position.

3. The adjustable suspension according to claim **1** or **2,** wherein the suspension body (12) comprises an injection orifice (40) fluidly communicating with the main fluid inlet (31) and opening into the first chamber (28), and an evacuation orifice (38) fluidly communicating with the fluid outlet (32) and opening into the suspension body.

4. The adjustable suspension according to claim **3,** wherein the piston (14) is movable in a direction of displacement (X), and wherein the evacuation orifice (38) and the injection orifice (40) are disposed in distant positions considered in said direction of displacement.

5. The adjustable suspension according to claim **4,** wherein the evacuation orifice (38) and/or the injection orifice (40) are formed in a side wall of the suspension body.

6. The adjustable suspension according to any one of claims **3** to **5,** wherein said evacuation orifice (38) opens into an evacuation chamber (36) fluidly communicating with the fluid outlet (32).

7. The adjustable suspension according to any one of claims **3** to **6,** wherein the evacuation orifice (38) is configured so as to open into the second chamber (30) when the piston (14) is in the first position, and so as to open into the first chamber (28) when the piston is in the second position.

8. The adjustable suspension according to any one of claims **3** to **6,** wherein the evacuation orifice (38') opens into the second chamber (30), and wherein the piston head (26) extends between the evacuation orifice (38') and the injection orifice (40) when the piston (14) is in the second position.

9. The adjustable suspension according to claim **8,** comprising a bypass channel (60) configured to fluidly communicate the first and second chambers (28,30) when the piston (14) is in the second position.

10. The adjustable suspension according to claim **9,** wherein the suspension body (12) comprises an inner wall (16), and wherein the bypass channel (60) is formed in said inner wall, the piston head (26) being positioned at the bypass channel when the piston (14) is in the second position, so that, in this second position, the first and second chambers (28,30) are in fluid communication.

11. The adjustable suspension according to claim **4** in combination with claim **9** or **10,** wherein, considered in the direction of displacement (X) of the piston (14), the bypass channel (60) extends between the evacuation orifice (38') and the injection orifice (40).

12. The adjustable suspension according to any one of claims **1** to **11,** wherein the valve device (41) comprises an inlet valve (46) disposed at the main fluid inlet (31) and an outlet valve (44) disposed at the fluid outlet (32), said inlet and outlet valves being configured to open when the valve device is in the second state and to close when the valve device is in the first state.

13. The adjustable suspension according to any one of claims **1** to **12,** wherein the fluid is a gas, for example carbon dioxide.

14. A method for adjusting an adjustable suspension (10) for a bicycle, comprising:
- a suspension body (12) provided with a main fluid inlet (31) configured to inject a fluid into the suspension body, and with a fluid outlet (32);
- a piston (14) disposed in the suspension body and comprising a piston head (26) delimiting a first chamber (28) and a second chamber (30) inside said suspension body, the first chamber being in fluid communication with the main fluid inlet, the piston being movable in translation in the suspension body between:
at least one first position in which the fluid outlet fluidly communicates with the second chamber but not with the first chamber, so as to deploy the piston, and
at least one second position in which the fluid outlet is in fluid communication with the first chamber so that the fluid injected through the main fluid inlet is guided to the fluid outlet, in order to evacuate the injected fluid from the suspension, the method comprising the following steps:
- the first chamber (28) is fluidly communicated with the atmosphere;
- the suspension is compressed so as to evacuate the fluid from the first chamber and place the piston (14) in the first position; and
- the fluid is injected into the first chamber through the main fluid inlet (31) of the suspension body (12) so as to displace the piston to its second position, in which the fluid injected through the main fluid inlet is guided to the fluid outlet (32); and
- the fluid injection is interrupted and the main fluid inlet and the fluid outlet are closed so that the fluid remains in the suspension.

15. A bicycle including at least one adjustable suspension (10) according to any one of claims **1** to **13.**
